# NOUVEAU FASCICULE DE BREVET EUROPEEN

(11) **EP 0 478 408 B2**
(45) Date de publication et mention de la décision concernant l'opposition: **02.05.1997**
(45) Mention de la délivrance du brevet: 13.04.1994
(21) Numéro de dépôt: 91402355.1
(22) Date de dépôt: 03.09.1991
(51) Int. Cl.: C02F 3/30

(54) **Réacteur perfectionné pour le traitement biologique des eaux résiduaires**
Verbesserter Reaktor für biologische Behandlung von Abwasser
Improved reactor for biological treatment of waste water

(30) Priorité: 25.09.1990 FR 9011804
(43) Date de publication de la demande: 01.04.1992
(73) Titulaire: DEGREMONT, F-92508 Rueil-Malmaison Cédex (FR)
(72) Inventeur: Savall, Vincent, F-78140 Velizy Villacoublay (FR); Nicol, Roger, F-92130 Issy Les Moulineaux (FR)
(74) Mandataire: Armengaud Ainé, Alain

(56) Documents cités:
- FR-A- 1 449 437
- US-A- 3 994 802
- US-A- 4 915 829
- JOURNAL OF THE WATER POLLUTION CONTROL FEDERATION. vol. 57, no. 4,Avril 1985, WASHINGTON US pages 300 - 308; B.E.RITTMANN ET AL.: 'Simultaneous denitrification with nitrification in single channel oxidation ditches'
- Brochure "La station d'épuration d'Hénin-Beaumont", 1984

## Description

La présente invention concerne un réacteur perfectionné pour le traitement biologique des eaux résiduaires.

On sait que lors du traitement biologique des eaux résiduaires on effectue notamment une nitrification biologique, c'est-à-dire une transformation en nitrates des composés azotés contenus dans l'effluent à traiter, permettant de réduire considérablement la demande en oxygène de l'effluent avant qu'il soit rejeté dans le milieu naturel. Ce traitement comporte également une étape de dénitrification biologique qui permet en outre la destruction des nitrates et l'élimination de l'azote sous forme de gaz.

La nitrification est l'oeuvre de bactéries aérobies consommant de l'oxygène et elle s'effectue habituellement dans un bassin appelé "bassin d'aération". La dénitrification est assurée par des bactéries qui, elles, consomment l'oxygène des nitrates en l'absence d'oxygène, c'est-à-dire en anoxie, dans un bassin nommé "bassin d'anoxie".

Etant donné qu'il est nécessaire que l'eau renvoyée au milieu naturel (par l'intermédiaire d'un clarificateur final qui la débarasse des boues en excès) contienne de l'oxygène, le bassin d'anoxie doit être placé en amont du bassin d'aération. On assure un recyclage très important vers ce bassin d'anoxie, à partir du bassin d'aération pour assurer la dénitrification des nitrates formés dans ce bassin d'aération et à partir du clarificateur final, en vue de la déntrification et également pour apporter la masse biologique nécessaire.

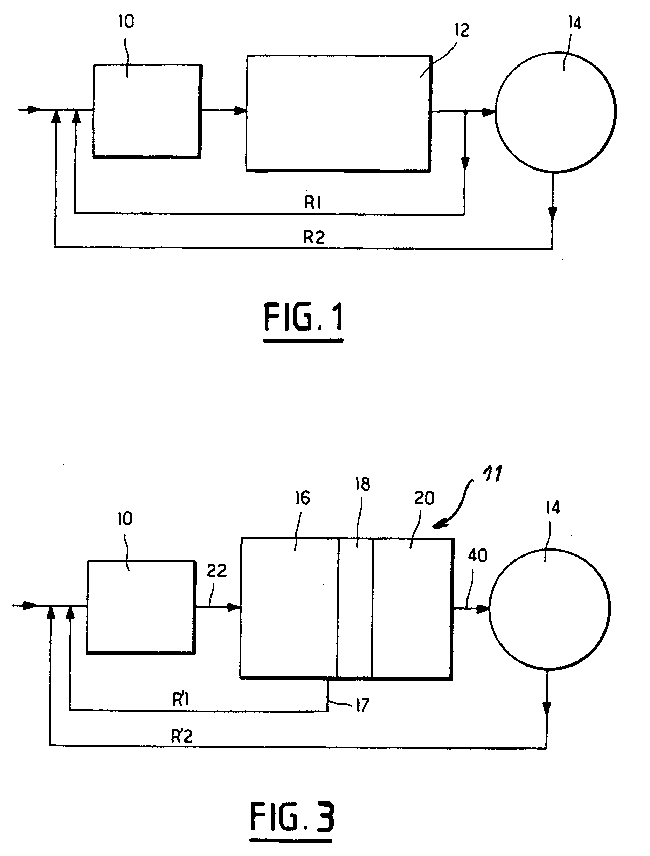

Sur la figure 1 des dessins annexés on a représenté de façon schématique un exemple de réalisation d'une telle installation classique, cette figure étant donnée simplement pour faciliter la comparaison avec une installation utilisant le réacteur objet de l'invention qui sera décrit ci-après.

Sur cette figure 1, on voit en 10 le bassin d'anoxie dans lequel s'effectue la dénitrification en 12 le bassin d'aération dans lequel s'effectue la nitrification et enfin, en 14 le clarificateur final. On a schématisé en R1 et R2 les recyclages vers le bassin d'anoxie 10 effectués à partir respectivement du bassin d'aération 12 et du clarificateur 14, ainsi qu'on l'a mentionné ci-dessus.

Dans ces installations de type connu, les bassins d'aération tels que 12 peuvent être soit du type connu en termes de génie chimique sous le nom de "flux piston", soit du type dit "à mélange intégral".

Le premier type de bassin d'aération assure un rendement élevé puisqu'il fonctionne comme une série de réacteurs, et une bonne décantabilité des boues. Par contre, ce type de bassin d'aération ne permet pas de supporter des variations importantes de débits et/ou de pollution et il consomme une énergie de brassage très élevée.

Le second type de bassin d'aération assure un brassage efficace avec une consommation d'énergie moins élevée mais, étant donné que les caractéristiques de l'eau sont les mêmes en tous les points du bassin, le rendement d'épuration est médiocre. Il interdit d'aube part tout début de dénitrification (qui serait favorable à l'économie générale du système) du fait qu'il y a toujours un excès d'oxygène nécessaire à la nitrification. Enfin, ce type de bassin d'aération est, comme le premier type décrit ci-dessus, sensible aux variations du débit et des caractéristiques du liquide à traiter. Ce dernier inconvénient commun aux deux types de bassin d'aération a pour conséquence défavorable d'imposer au bassin d'aération un volume très important (bien supérieur à celui qu'exigent les seuls besoins de l'aération) pour amortir les variations de débit ou de pollution qui sont très fréquentes dans le domaine de traitement des eaux résiduaires. Il en résulte une seconde conséquence, non moins défavorable : en effet, la concentration en nitrates est faible en fin de bassin d'aération et il faut donc pour traiter ces nitrates, consentir à des recyclages élevés vers le bassin d'anoxie qui, de ce fait, doit présenter lui-même un volume très important.

US-A-4 915 829 fait connaître un réacteur pour le traitement biologique des eaux résiduaires qui se compose d'un bassin unique comprenant successivement une zone de dénitrification, une zone d'aération à mélange intégral, une première zone d'aération à flux piston, une zone de décantation, une seconde zone d'aération à flux piston et une zone de clarification. Cet état antérieur de la technique constitue un développement des techniques préalablement mentionnées.

US-A-3,994,802 décrit un réacteur à trois zones successives : une zone d'aération fonctionnant en flux piston, une zone d'anoxie et une troisième zone munie d'un aérateur de surface.

La présente invention se propose d'apporter un réacteur perfectionné ne présentant pas les inconvénients des installations de type connu décrites ci-dessus.

Cette invention a donc pour objet un réacteur perfectionné pour le traitement biologique des eaux résiduaires, destiné à remplacer le bassin d'aération dans les installations comportant un bassin d'anoxie dans lequel s'effectue la dénitrification, un bassin d'aération où est réalisée la nitrification des effluents par des bactéries aérobies et un clarificateur final, ce réacteur se composant d'un bassin unique (11) comportant trois zones distinctes qui sont, dans l'ordre où le liquide à traiter les traverse successivement :
- une zone d'aération (16) fonctionnant en flux piston ;
- une zone d'anoxie (18) et ;
- une troisième zone (20) à mélange intégral munie de moyens de brassage caractérisé en ce que la dite troisième zone (20) comporte des moyens de brassage et de circulation réalisés sous la forme d'une cloison transversale (32) et de circulateurs (34), et, des moyens d'aération réglables (35, 36) asservis à des moyens de contrôle du potentiel d'oxydo-réduction (38).

Selon une caractéristique de la présente invention, le volume global du réacteur est fonction de la quantité de boues biologiques produite, de la demande en oxygène du liquide à traiter et de la température.

Selon l'invention, le volume de la zone à flux piston est fonction du flux d'azote (NH₄) à nitrifier et de la température, celui de la zone d'anoxie est fonction de l'oxygène libre résultant de la quantité d'oxygène à transférer dans la zone à flux piston pour oxyder l'ion ammonium et celui de la zone à mélange intégral correspond à la concentration en nitrates et au maintien d'un potentiel d'oxydo-réduction suffisant.

Selon l'invention, le temps de séjour global de l'effluent dans le réacteur est de l'ordre de 6 à 15 heures.

Selon un exemple de réalisation, le réacteur se présente sous la forme d'un bassin comportant des cloisons délimitant les trois zones :
- la zone d'aération fonctionnant en flux piston comportant des moyens d'alimentation en air permettant de maintenir par aération une teneur en oxygène dissous supérieure à 2 mg par litre ;
- la zone d'anoxie, disposée à la suite de la zone d'aération, qui est pourvue de moyens de brassage par de l'air ou d'un système d'agitateur mécanique pour maintenir en suspension les boues, et qui comporte à son entrée (c'est-à-dire à la sortie de la zone d'aération) une conduite assurant le recyclage de la liqueur vers le bassin d'anoxie qui est situé en tête de l'installation, en amont du réacteur ;
- la zone à mélange intégral qui est munie de circulateurs de type connu assurant le brassage et la circulation du flux dans cette zone et qui est également pourvue d'aérateurs ainsi que de moyens de contrôle du potentiel d'oxydo-réduction auxquels sont asservis lesdits aérateurs. Cette zone est pourvue d'un orifice de sortie débouchant sur la conduite assurant le transfert de la liqueur vers le clarificateur.

D'autres caractéristiques et avantages de la présente invention ressortiront de la description faite ci-après en référence aux dessins annexés qui en illustrent un exemple de réalisation dépourvu de tout caractère limitatif. Sur les dessins :
- la figure 1 représente l'installation classique décrite ci-dessus ;
- la figure 2 représente de façon schématique et en perspective un mode de réalisation d'un réacteur perfectionné selon l'invention et ;
- la figure 3 est un schéma représentant une installation dans laquelle est mis en oeuvre le réacteur selon la figure 2.

Ainsi qu'on le voit sur la figure 3, le réacteur selon l'invention, désigné dans son ensemble par la référence 11, est placé entre un réacteur d'anoxie 10, analogue au réacteur 10 de l'installation classique décrite ci-dessus en référence à la figure 1, et le clarificateur 14.

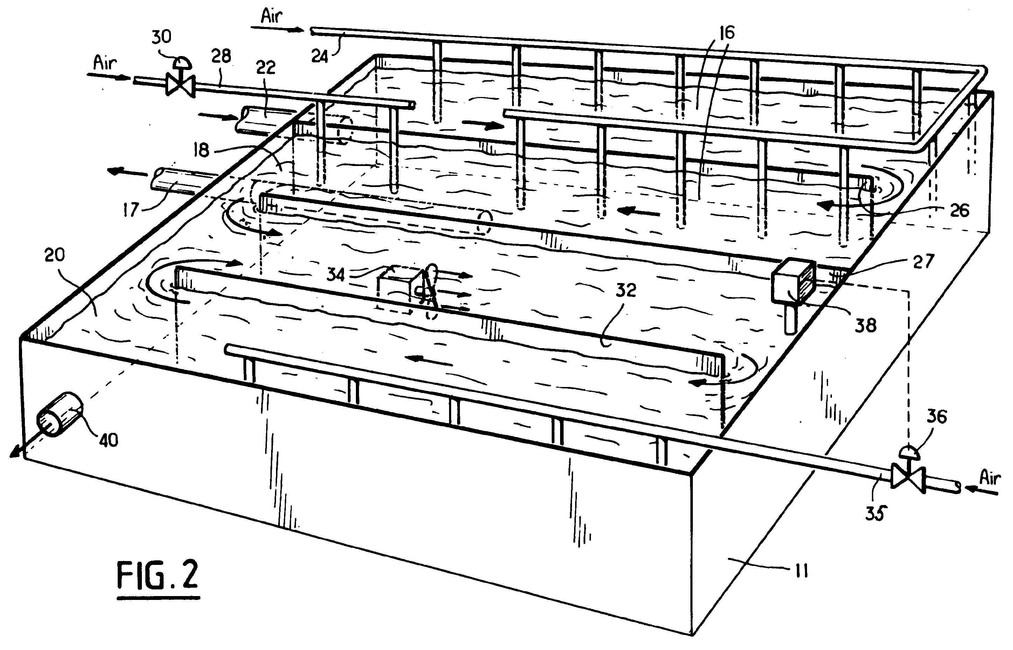

Comme on le voit sur la figure 2, le réacteur selon la présente invention se présente sous la forme d'un bassin 11 dans lequel des cloisons délimitent les trois zones successives :
- la zone d'aération 16 fonctionnent en flux piston ;
- la zone d'anoxie 18 et ;
- la zone à mélange intégral 20 fonctionnant dans des conditions d'aération réglables.

Selon l'invention, le volume global du réacteur est fonction de la quantité de boues biologiques produite, de la demande en oxygène et de la température.

Le volume de la zone d'aération à flux piston 16 est fonction du flux d'azote (NH₄) à nitrifier et de la température. Selon l'invention, ce volume peut représenter de 40 à 70 % du volume total du réacteur.

La zone d'aération 16 comporte la conduite 22 d'entrée de la liqueur dans le réacteur et elle est pourvue de moyens d'alimentation en air 24. Comme on le voit sur le dessin, cette zone d'aération 16 comporte une cloison transversale 26 permettant d'y réaliser une circulation sur un plus long parcours.

Cette zone d'aération 16 a pour objet d'éliminer la demande biologique en oxygène (D.B.O.) de l'eau provenant du bassin d'anoxie 10, situé en amont (figure 3) et introduite par la conduite 22, et de transformer l'azote ammoniacal en nitrates au moyen de bactéries aérobies. Du fait même de son fonctionnement en flux piston, le rendement d'épuration de cette zone d'aération est excellent de sorte que cette zone, dont les dimensions sont calculées strictement pour l'usage qui en est fait, présente un volume très inférieur à celui d'un bassin d'aération de type classique, tel que le bassin 12 de l'installation connue illustrée par la figure 1, de l'ordre de 50 % ou même moins, suivant les caractéristiques de l'eau à traiter, c'est-à-dire selon les marges de sécurité qu'il convient de prendre sur un bassin d'aération classique.

Il en résulte donc que la concentration en nitrates de la liqueur mixte, c'est-à-dire du mélange d'eau résiduaire en traitement et de biomasse, sortant de cette zone d'aération et partiellement recyclée vers le bassin d'anoxie 10 (figure 3), est beaucoup plus élevée que celle de la liqueur mixte produite en fin du bassin d'aération classique 12 d'une installation de type connu, telle que décrite ci-dessus en référence à la figure 1.

On notera que les bactéries nitrifiantes étant strictement aérobies, on maintient par aération, grâce au système d'aération 24, dans cette zone 16 une teneur en oxygène dissous qui est supérieure à 2 mg par litre.

La zone d'anoxie 18 qui est disposée à la suite de la zone d'aération à flux piston 18 a pour objet de consommer l'oxygène dissous résiduel contenu dans la liqueur mixte sortant de la zone d'aération 16, par le simple effet de l'activité endogène des bactéries avant que l'effluent soit admis dans la troisième zone 20 du réacteur, fonctionnent en mélange intégral, où l'oxygène inhiberait le fonctionnement de la dénitrification. Pour réaliser un brassage périodique de la zone maintenant les boues en suspension, on peut prévoir tout moyen de brassage, tel que par exemple des agitateurs mécaniques. A l'entrée de cette zone d'anoxie 18, c'est-à-dire à la sortie de la zone d'aération, est prélevée la liqueur devant être recyclée dans le bassin d'anoxie 10 situé en tête de l'installation illustrée par la figure 3. Comme on le voit sur la figure 2, ce prélèvement s'effectue par l'intermédiaire d'une conduite 17.

Le volume de cette zone d'anoxie 18 est fonction de l'oxygène libre résultant de la quantité d'oxygène à transférer dans la zone à flux piston pour oxyder l'ion ammonium. Ce volume selon l'invention peut représenter de 2 à 10 % du volume total du réacteur.

La dernière zone du réacteur selon la présente invention est la zone de mélange intégral 20. Cette zone est séparée de la zone d'anoxie 18 par une cloison transversale 27, elle comporte une cloison transversale 32 pour assurer la circulation de la liqueur mixte et elle est pourvue de circulateurs, réalisés par exemple sous la forme d'hélices de recirculation 34 (ou par tout moyen connu équivalent), assurant un brassage et une circulation du flux dans cette zone 20, avec un débit très élevé, de l'ordre de 15 à 40 fois le débit de la liqueur mixte influente. Cette zone est également pourvue de moyens d'aération schématisés sur le dessin par la conduite d'alimentation en air 35 munie d'une vanne automatique 36 et de moyens de contrôle du potentiel d'oxydo-réduction caractérisant l'état d'oxygénation de l'effluent. Dans le mode de réalisation représenté sur la figure 2, ces moyens sont réalisés sous la forme d'une sonde 38 de contrôle du potentiel d'oxydoréduction à laquelle est asservie la vanne 36. Cette zone 20 comporte une conduite de sortie de liqueur 40 vers le clarificateur 14 (figure 2).

La recirculation intense réalisée selon l'invention dans la zone à mélange intégral 20 permet d'assurer dans de bonnes conditions (mélange intégral) la dénitrification de l'effluent appauvri en oxygène provenant de la zone d'anoxie 18. Ceci a pour conséquence avantageuse de réduire la charge, donc les dimensions, du bassin d'anoxie 10 placé en tête de l'installation (figure 3).

Le contrôle du potentiel d'oxydo-réduction obtenu par l'asservissement de la vanne automatique d'introduction d'air 36 aux informations fournies par la sonde 38 permet de :
- maintenir la zone en état d'anoxie, c'est-à-dire d'éviter soit une sur-oxygénation nuisible à la dénitrification, soit un brassage en anaérobiose qui altérerait la composition de la biomasse en bactéries aérobies et nitrifiantes qui doivent être séparées lors de la décantation finale (dans le clarificateur 14), et récyclées partiellement en tête de l'installation (voir la figure 3) ;
- apporter un supplément d'oxygène (par la mise en oeuvre du système d'introduction d'air 34 ou de tout autre système d'aération) pour faire fonctionner occasionnellement cette zone 20 de façon aérobie et compléter ainsi l'action de la première zone 16 du réacteur, si une variation accidentelle importante des caractéristiques du liquide à traiter nécessite ce complément.

A titre indicatif, on indiquera que, selon les cas, le temps de séjour global des effluents dans le réacteur selon l'invention varie de 6 à 15 heures.

Parmi les avantages apportés par le réacteur à trois zones selon l'invention, on peut citer notamment les suivants :
- une réduction au strict nécessaire du volume consacré à l'aération ;
- un maintien des conditions d'oxygénation différentes requises en chaque point du réacteur ;
- l'obtention d'un fonctionnement satisfaisant lors de variations accidentelles du débit ou de la pollution ;
- une réduction du débit recyclé en tête vers le bassin d'anoxie 10, à la fois parce que le liqueur mixte prélevée à la sortie de le zone d'aération 16 du réacteur est beaucoup plus concentrée en bactéries nitrifiantes que celle provenant d'un bassin d'aération classique (tel que le bassin 12 de l'installation illustrée par la figure 1) et parce que la troisième zone du réacteur (zone de mélange intégral 20) assure elle-même une partie de la dénitrification ;
- une réduction du volume du bassin d'anoxie 10 situé en tête de l'installation (voir la figure 3), qui reçoit moins de nitrates et sous une forme plus concentrée et ;
- une compacité de l'installation mettant en oeuvre le réacteur de l'invention.

On a donné ci-après, à titre d'exemples non limitatifs, les caractéristiques de deux installations :
- l'une de type classique conforme à celle décrite ci-dessus en référence à la figure 1 et ;
- l'autre (figure 3) mettant en oeuvre un réacteur selon la présente invention, et tel que décrit ci-dessus en référence à la figure 2.

Dans ces deux exemples, les conditions d'utilisation étaient identiques, à savoir :
- Eau à traiter :
   - débit: 1 200 m3/h
   - D.B.O: 6 450 kg/j
   - azote: 1 022 kg/j/
- Normes de rejet :
   - D.B.O: 20 mg/l
   - azote: 5 mg/l
   - nitrates: 5 mg/l (exprimés en azote lié aux nitrates).

Les installations doivent donc nitrifier 710 kg/j d'azote et dénitrifier 570 kg/j d'azote lié aux nitrates. Les caractéristiques des installations sont donc les suivantes :
1° - Installation de type classique :
   - bassin d'anoxie 10 5 950 m3
   - bassin d'aération 12 13 300 m3
   - clarificateur 14 3 500 m3
   - recyclage vers le bassin d'anoxie 10 4 750 m3/h
      (3 550 m3/h provenant de la zone d'aération 12 : recyclage R1, figure 1)
      (1 200 m3/h provenant du clarificateur 14 : recyclage R2, figure 1).
2° Installation (figure 3) mettant en oeuvre un réacteur selon l'invention:
   - bassin d'anoxie 10 4 200 m3
   - réacteur 11 comportant les trois zones 16, 18 et 20 13 300 m3
   - clarificateur 14 3 500 m3
   - recyclage vers le bassin d'anoxie 10 3 000 m3/h
      (1 800 m3/h provenant de la zone d'aération 16 du réacteur : recyclage R'1, figure 3)
      (1 200 m3/h provenant du clarificateur 14 : recyclage R'2, figure 3).

## Revendications

1. Réacteur perfectionné pour le traitement biologique des eaux résiduaires, destiné à remplacer le bassin d'aération dans les installations comportant un bassin d'anoxie dans lequel s'effectue la dénitrification, un bassin d'aération où est réalisée la nitrification des effluents par des bactéries aérobies et un clarificateur final, ce réacteur se composant d'un bassin unique (11) comportant trois zones distinctes qui sont, dans l'ordre où le liquide à traiter les traverse successivement :
- une zone d'aération (16) fonctionnant en flux piston ;
- une zone d'anoxie (18) et ;
- une troisième zone (20) à mélange intégral munie de moyens de brassage caractérisé en ce que la dite troisième zone (20) comporte des moyens de brassage et de circulation réalisés sous la forme d'une cloison transversale (32) et de circulateurs (34), et, des moyens d'aération réglables (35, 36) asservis à des moyens de contrôle du potentiel d'oxydo-réduction (38).

2. Réacteur selon la revendication 1, caractérisé en ce que son volume global est fonction de la quantité de boues biologiques produite, de la demande en oxygène du liquide à traiter et de la température.

3. Réacteur selon l'une des revendications 1 ou 2, caractérisé en ce que le volume de la zone d'aération à flux piston (16) est fonction du flux d'azote (NH₄) à nitrifier et de la température.

4. Réacteur selon l'une quelconque des revendications précédentes, caractérisé en ce que le volume de la zone d'anoxie (18) est fonction de l'oxygène libre résultant de la quantité d'oxygènes à transférer dans la zone à flux piston (16) pour oxyder l'ion ammonium.

5. Réacteur selon l'une quelconque des revendications précédentes, caractérisé en ce que le volume de la zone à mélange intégral (20) correspond à la concentration en nitrates et au maintien d'un potentiel d'oxydo-réduction suffisant.

6. Réacteur selon l'une quelconque des revendications précédentes, caractérisé en ce qu'il se présente sous la forme d'un bassin (11) comportant des cloisons (26, 27,32) délimitant les trois zones :
- la zone d'aération (16) fonctionnant en flux piston comportant des moyens d'alimentation en air (24) permettant de maintenir par aération une teneur en oxygène dissous supérieure à 2 mg par litre ;
- la zone d'anoxie (18), disposée à la suite de la zone d'aération qui est pourvue de moyens de brassage par un système d'agitateur mécanique pour maintenir en suspension les boues, et qui comporte à son entrée, c'est-à-dire à la sortie de la zone d'aération (16) une conduite (17) assurant le recyclage de la liqueur vers le bassin d'anoxie (10) qui est situé en tête de l'installation, en amont du réacteur ;
- la zone à mélange intégral (20) qui est munie de circulateurs de type connu (34) assurant le brassage et la circulation du flux dans cette zone et qui est également pourvue d'aérateurs (35), ainsi que de moyens de contrôle du potentiel d'oxydo-réduction (38) auxquels sont asservis lesdits aérateurs, cette zone étant pourvue d'un orifice de sortie (40) débouchant sur la conduite assurant le transfert de la liqueur vers le clarificateur (14).

## Claims

1. Improved reactor for the biological treatment of waste water, intended for replacing the aeration tank in installations comprising an anoxic tank in which denitrification is carried out, an aeration tank in which nitrification of the effluents is carried out by aerobic bacteria, and a final clarifier, this reactor being composed of a single tank (11) comprising three distinct zones which are, in the order in which the liquid to be treated passes through them:
- an aeration zone (16) operating in plug flow;
- an anoxic zone (18) and:
- a third zone (20) with integral mixing, equipped with stirring means, characterized in that said third zone (20) comprises stirring and circulation means realized in the form of a transverse partition (32) and circulators (34), and controlled aeration means (35, 36) subjected to the control of means for monitoring the oxidoreduction potential (38).

2. Reactor according to claim 1, characterized in that its total volume is a function of the quantity of biological sludge produced, of the oxygen demand of the liquid to be treated and of the temperature.

3. Reactor according to one of claims 1 or 2, characterized in that the volume of the plug flow aeration zone (16) is a function of the nitrogen flow (NH₄) to be nitrified and of the temperature.

4. Reactor according to any one of the preceding claims, characterized in that the volume of the anoxic zone (18) is a function of the free oxygen resulting from the quantity of oxygen to be transferred into the plug flow zone (16) for oxidizing the ammonium ion.

5. Reactor according to any one of the preceding claims, characterized in that the volume of the integral mixing zone (20) corresponds to the nitrates concentration and to the maintenance of an adequate oxidoreduction potential.

6. Reactor according to any one of the preceding claims, characterized in that it is present in the form of a tank (11) comprising partitions (26, 27, 32) delimiting the three zones:
- the aeration zone (16) operating in plug flow and comprising air feed means (24) enabling a dissolved oxygen content exceeding 2 mg per litre to be maintained by aeration;
- the anoxic zone (18), disposed after the aeration zone, which is provided with means for stirring by a mechanical agitator system for maintaining the sludge in suspension, and which comprises at its inlet, that is to say at the outlet from the aeration zone (16), a pipe (17) assuring the recycling of the liquor to the anoxic tank (10) which is situated at the head of the installation, upstream of the reactor;
- the integral mixing zone (20) which is provided with circulators of known type (34) assuring the stirring and circulation of the flow in this zone and which is also provided with aerators (35), and with means for monitoring the oxidoreduction potential (38), to which said aerators are subjected for control, this zone being provided with an outlet orifice (40) leading to the pipe assuring the transfer of the liquor to the clarifier (14).

## Patentansprüche

1. Verbesserter Reaktor zur biologischen Behandlung von Abwasser, der dazu bestimmt ist, das Belebungsbecken in den Anlagen zu ersetzeen, die ein anoxisches Becken, in dem die Denitrifikation erfolgt, ein Belebungsbecken, in dem durch aerobe Bakterien die Nitrifikation des Abwassers ausgeführt wird, und eine letzte Kläre aufweisen, wobei dieser Reaktor aus einem einzigen Becken (11) aufgebaut ist, das drei verschiedene Bereiche aufweist, bei denen es sich, in der Reihenfolge, in der sie von der zu behandelnden Flüssigkeit nacheinander durchflossen werden, handelt um:
- einen Belebungsbereich (16), der in Kolbenströmung durchflossen wird,
- einen anoxischen Bereich (18) und
- einen dritten Bereich (20) mit integraler Mischung, der mit Mitteln zum Rühren versehen ist,
dadurch **gekennzeichnet,**
daß dieser dritte Bereich (20) Mittel zum Rühren und zur Zirkulation aufweist, die in Form einer quer liegenden Trennwand (32) und eines Zirkulators (34) realisiert sind, und ebenso Mittel zur regelbaren Belüftung (35,36) aufweist, die über Mittel zur Kontrolle des Redox-Potentials (38) gesteuert werden.

2. Reaktor nach Anspruch 1,
dadurch **gekennzeichnet,**
daß sein Gesamtvolumen von der Menge der produzierten biologischen Schlämme, vom Sauerstoffbedarf der zu behandelnden Flüssigkeit und von der Temperatur abhängt.

3. Reaktor nach Anspruch 1 oder 2,
dadurch **gekennzeichnet,**
daß das Volumen des gerührt durchmischten Belebungsbereichs (18) vom zu nitrifizierenden Stickstofffluß (NH₄) und von der Temperatur abhängt.

4. Reaktor nach einem der vorhergehenden Ansprüche,
dadurch **gekenzeichnet,**
daß das Volumen des anoxischen Bereichs (18) vom freien Sauerstoff abhängt, der aus der in den Kolbenströmungsbereich (16) zur Oxidation des Ammoniumions zu transferierenden Sauerstoffmenge resultiert.

5. Reaktor nach einem der vorhergehenden Ansprüche,
dadurch **gekennzeichnet,**
daß das Volumen des Bereichs mit integraler Mischung (20) von der Konzentration an Nitraten und vom Aufrechterhalten eines ausreichenden Redox-Potentials abhängt.

6. Reaktor nach einem der vorhergehenden Ansprüche,
dadurch **gekennzeichnet,**
daß er in Form eines Beckens (11) mit Zwischenwänden (26,27,32) ausgebildet ist, die die drei Bereiche abgrenzen:
- den Belebungsbereich (16), der in Kolbenströmung durchflossen wird, mit Mitteln zur Luftzufuhr (24), die es gestatten, durch Belüftung einen Gehalt an gelöstem Sauerstoff von mehr als 2 mg pro Liter aufrechtzuerhalten;
- den anoxischen Bereich (18), der im Anschluß an den Belebungsbereich angeordnet und mit Mitteln zum Rühren durch eine mechanische Rührvorrichtung versehen ist, um die Schlämme in Suspension zu halten, und der an seinem Eingang, das heißt am Ausgang des Belebungsbereichs (16), eine Leitung (17) aufweist, die die Rückführung der Flüssigkeit zum anoxischen Becken (10) gewährleistet, das am Beginn der Vorrichtung, in Flußrichtung gesehen vor dem Reaktor, angeordnet ist;
- den Bereich (20) mit integraler Mischung, der mit Zirkulatoren bekannter Bauart (34) versehen ist, die das Rühren und die Zirkulation der Strömung in diesem Bereich gewährleisten, und der gleichfalls mit Belüftern (35) sowie mit Mitteln zur Kontrolle des Redox-Potentials (38) versehen ist, durch die die Belüfter gesteuert sind, wobei dieser Bereich mit einer Austrittsöffnung (40) versehen ist, die in die Leitung mündet, die den Transfer der Flüssigkeit zur Kläre (14) gewährleistet.
